# EUROPEAN PATENT SPECIFICATION

(11) **EP 1 945 426 B1**
(45) Date of publication and mention of the grant of the patent: **25.01.2017**
(21) Application number: 06821771.0
(22) Date of filing: 09.11.2006
(51) Int. Cl.: B28D 1/00, B28D 7/04

(54) **PROCESS AND EQUIPMENT FOR TREATING STONE BLOCKS**
VERFAHREN UND ANLAGE ZUR BEHANDLUNG VON STEINBLÖCKEN
PROCESSUS ET ÉQUIPEMENT DE TRAITEMENT DE BLOCS DE PIERRE

(30) Priority: 11.11.2005 IT FI20050229
(43) Date of publication of application: 23.07.2008
(73) Proprietor: Prometec S.r.l., 54100 Massa (IT)
(72) Inventor: PUCCI, Roberto, I-54100 MASSA (IT)
(74) Representative: Mannucci, Michele
(86) International application number: PCT/IT2006/000782
(87) International publication number: WO 2007/054995

(56) References cited:
- WO-A-2005/077645
- WO-A1-2007/052319
- FR-A- 788 466
- GB-A- 766 918
- US-A1- 4 560 523
- US-A1- 4 942 013
- US-B2- 6 843 242

## Description

Almost all blocks made of marble, granite and the like supplied by quarries have flaws, such as fractures of various degrees running in various directions which hinder subsequent processes performed on the blocks to obtain slabs or strips. These processes can in fact be very dangerous and costly, depending on the type of flaws present, which can cause breakage or even total destruction of the block while it is being cut into slabs, with damages to operators and to the machinery utilized.

Therefore, as from the early 90s, techniques have been identified aimed at treating the blocks before subjecting them to these processes. These techniques comprise:
- applying veneering with the use of stone slabs, of glass fiber mats and mastics based on polyester resins to close the most obvious fractures;
- squaring the block, constructing - around and in proximity of the walls thereof - a covering of wooden panels, filling the cavity between the covering and the block using resins, inserting the block thus prepared into an autoclave to subject it to one or more vacuum and pressurization cycles, subsequently removing the prepared block from the autoclave and leaving it outside for natural completion of resin catalyzation;
- bagging the blocks with sealed polyester after having bound them with draining material, and then injecting epoxy resin between the bag and the block.

All these techniques proved to be costly owing to the work involved in preparing the blocks, especially if they required to be squared, which was not very efficacious and the result was uncertain and unpredictable owing to limited penetration of the resins, especially in the presence of powder materials such as talc or soils inside cracks, and to resin polymerization in uncontrolled conditions of temperature and humidity. A method according to the preamble of claim 1 is known from WO-A-2005/077645 and an equipment according to the preamble of claim 14 is disclosed in US-B-6843242.

WO-A-2007/052319 belongs to the state of the art under Article 54(3) EPC.

The object of the present invention is to overcome the aforesaid limitations by providing a process and equipment to perform said process, suitable to provide safe treatment of the blocks at acceptable costs, with a level of consolidation which allows the slabs or strips desired to be produced in total safety. This is achieved by a process comprising the combination of features of independent claim 1 and equipment comprising the combination of features of independent claim 14.

Preferred embodiments of the invention are set out in the dependent claims.

The simultaneous action of the vacuum produced inside the system for containment of the resin and of the pressure in the autoclave produces results of decidedly better quality, with penetration of the resin in great depth into the most imperceptible of cracks in the blocks, even when dusts or other solid elements are present.

Preferably, suction of the top part of said sealed volume is performed through a labyrinth path by means of a filter-trap, to prevent the resin from penetrating the suction duct while ensuring that the block in said volume is totally immersed in the resin.

To improve and accelerate the operation to make the resin penetrate the block, inside the covering with draining layer, the resin can be fed with a high hydraulic head, with respect to the one due to ambient pressure; this can be obtained by providing a container of liquid resin (where the resin can be formulated) which is closed and pressurized at least during the step to inject the resin around the surface of the block to be treated.

According to the invention, to improve penetration of the resin in the cracks and to reduce treatment times, during the pressurization step in the autoclave progressive pressurization is also implemented in the container of the block and of the resin, to maintain only a limited difference in the level of pressure in the autoclave and a lower pressure in the volume containing the block and the resin; in this way the resin penetrates the cracks of the block more rapidly and completely. This can be easily obtained by a duct which branches from the autoclave pressurization system and leads to the cavity surrounding the block to be treated and containing the resin; a pressure reduction unit is provided in said duct, to systematically ensure a limited difference in the pressure in the autoclave and the limitedly and proportionally lower pressure that must reign inside the sheath.

The process may also include an initial washing and drying step in a hot chamber, with circulation of air heated to a controlled temperature, e.g. to 65°C.

Polymerization can be implemented in a specific hot chamber, with circulation of air heated to a controlled temperature, maintaining the sheath around the block in a vacuum until polymerization is completed.

The draining layer covering the block can comprise felt panels suitable to absorb the resin, or also meshes having the weft superimposed on the warp - to allow the resin to circulate -, and/or mats made of glass fiber or the like.

Preferably, an elastic tank filled with resin can be inserted along the feed path of the resin between the sealed covering and the block, to allow manual filling to form a uniform layer of resin all around the block.

The invention also relates to equipment to perform the process to treat stone blocks according to the invention. Said equipment comprises:
- a station to wash the blocks with high pressure hoses (e.g. 150 bar);
- a system to move the blocks between various workstations comprising individual transport carts;
- a station to load the blocks to be treated onto said carts and a station to unload the treated blocks;
- a station to dry the blocks comprising a chamber with circulation of air heated to a controlled temperature, inside which one or more blocks with the relative carts are placed;
- a station to prepare the blocks through positioning the draining layer and the mats therearound, wrapping and hermetically sealing the sheath around the block and injecting polymerizable resin between sheath and block;
- a station comprising an autoclave suitable to receive at least one prepared block with its respective cart and subject it to a pre-established external pressure before the polymerization of the resin starts and during the initial step thereof;
- a station to complete polymerization of the resin comprising a chamber suitable to receive at least one covered block with its respective cart, air heated to a controlled temperature being circulated inside said chamber, and the station being provided with a vacuum pump to maintain the vacuum inside the sealed sheath.

In the equipment according to the invention intermediate parking stations can be provided between the various work stations, to act as a buffer for movement of the blocks.

The invention will be better understood by following the description and accompanying drawing, which shows a non-limiting example of said finding. In the drawing:
Figure 1 shows a plan view of equipment for treating stone blocks according to the invention;
Figures 2 and 3 show side views of the equipment in Figure 1 according to II-II and III-III respectively;
Figures 4 to 12 schematically show, in a perspective view, subsequent steps of preparation and treatment of a stone block according to the invention;
Figure 12A shows a variant with respect to Figure 12;
Figure 13 shows a perspective view of a filter-trap, according to the invention;
Figure 14 shows an exploded view of the components of the filter-trap in Figure 13;
Figures 15 and 16 respectively show axial section views of the two couplings for connection with a vacuum pump, positioned superiorly to the stone block in Figure 11; and
Figure 17 shows an axial section view of the resin feed coupling positioned in the bottom part of the stone block in Figure 11.

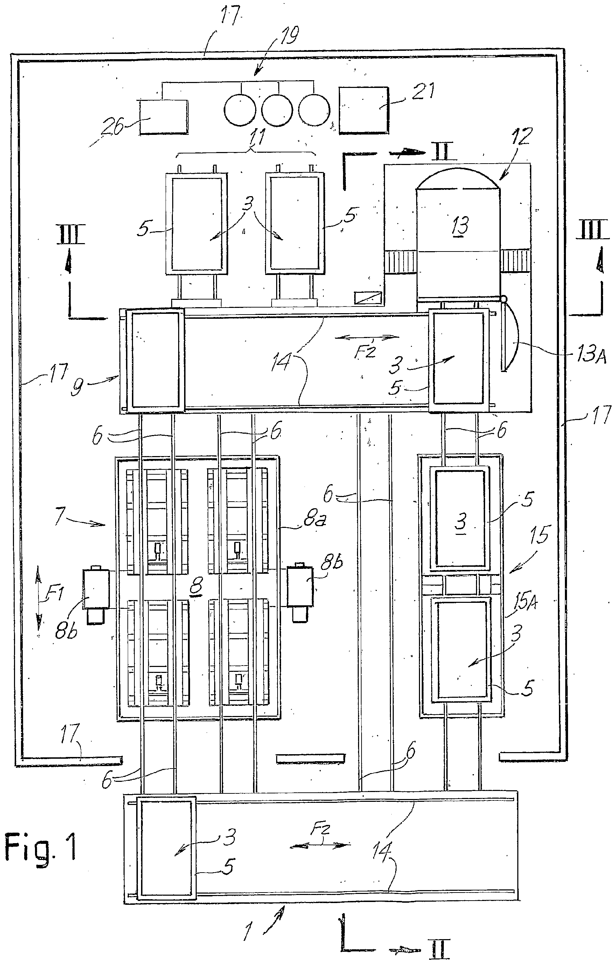

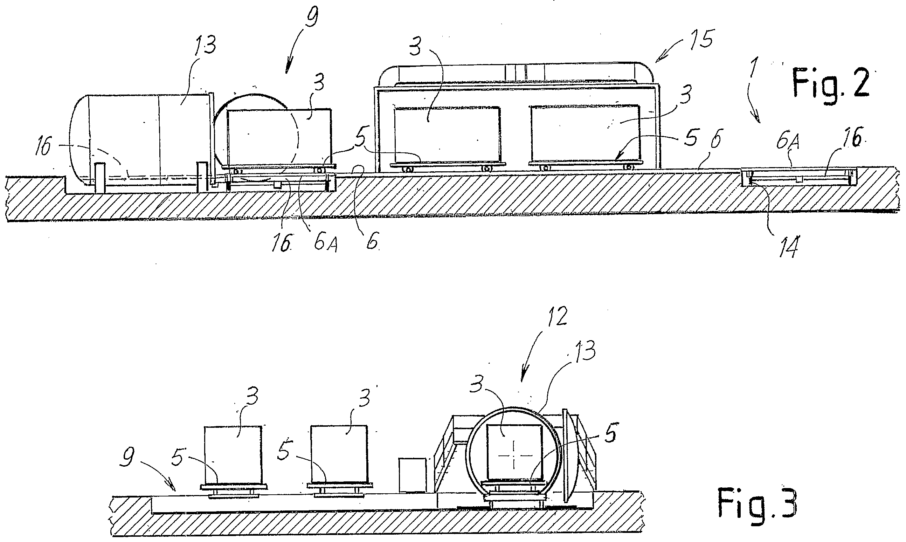

With reference to Figures 1, 2 and 3, the equipment comprises, following the order of the steps of the treatment process:
- a station to wash the blocks (not shown in the drawing) with jets of water using high pressure hoses (e.g. 150 bar);
- a station 1 to load/unload the more or less regular) stone blocks 3 (onto respective carts 5 running on tracks 6 in a direction parallel to the double arrow F1. In the station, each cart 5 rests on a short section 6A of track fixed superiorly to a cart 16 running on a track 14 in the direction of the double arrow F2, orthogonal to the direction F1 in which the carts 5 run. In the station 1 the blocks are placed on the carts 5 after placing thereon a gas-impermeable plastic sheet, suitable to cover, in a subsequent step, the entire surface of the block 3, and a draining layer formed of plastic meshes, layers of felt, mats made of glass fiber or the like, as will be described in detail hereunder;
- a station 7 to dry the blocks composed of a chamber 8 defined by walls 8a and by a ceiling, said chamber being crossed by a pair of tracks 6 and provided with convectors 8b suitable to make air heated to a controlled temperature, e.g. to 65°C, circulate inside said chamber;
- a station 11 to cover the blocks 3 with the plastic sheet and the draining layer, and to feed resin into the sealed volume in contact with the block;
- a station 12 provided with an autoclave 13;
- a polymerization station 15, from which the carts 5 are subsequently returned to the station 1 for loading/unloading;
- a switching station 9 suitable to receive the carts 5 with the blocks 3 coming from the drying station 7 and switch them to the other aforesaid stations. This station, just as the loading/unloading station 1, has a transverse track 14 on which carts 16 provided superiorly with a section of track 6A, orthogonal to the track 14, can run to receive a respective cart 5 and switch it to the various sections of track 6 which lead to said station 9.

All the aforesaid stations, except station 1, are positioned in a covered room with outside walls 17.

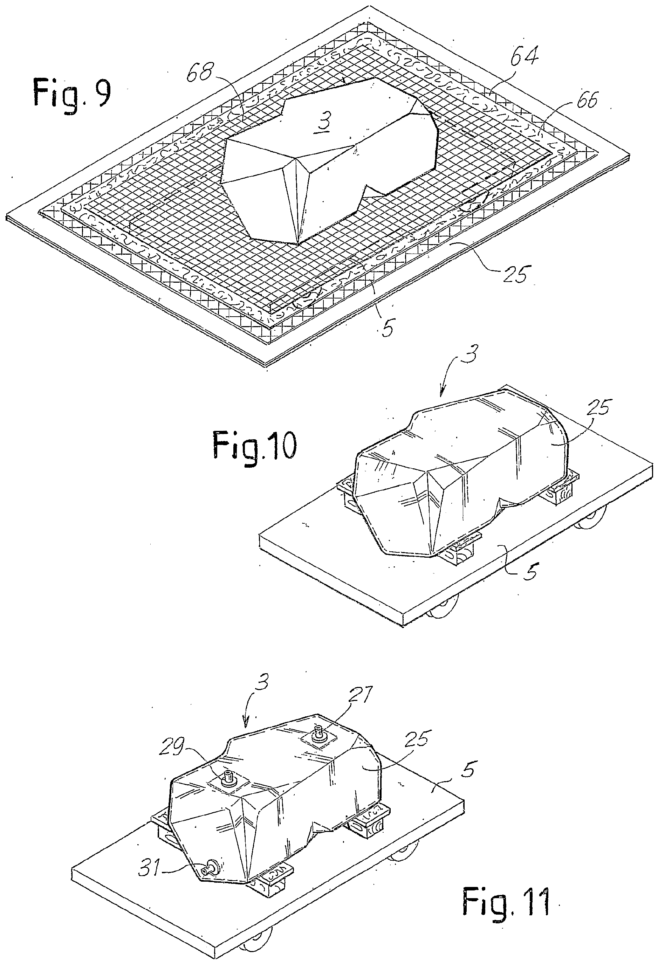

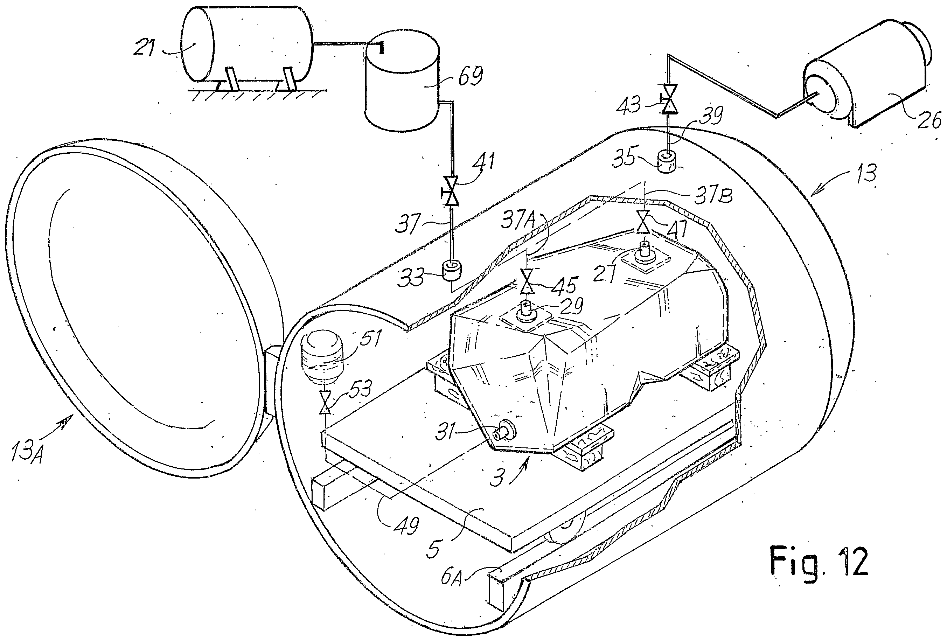

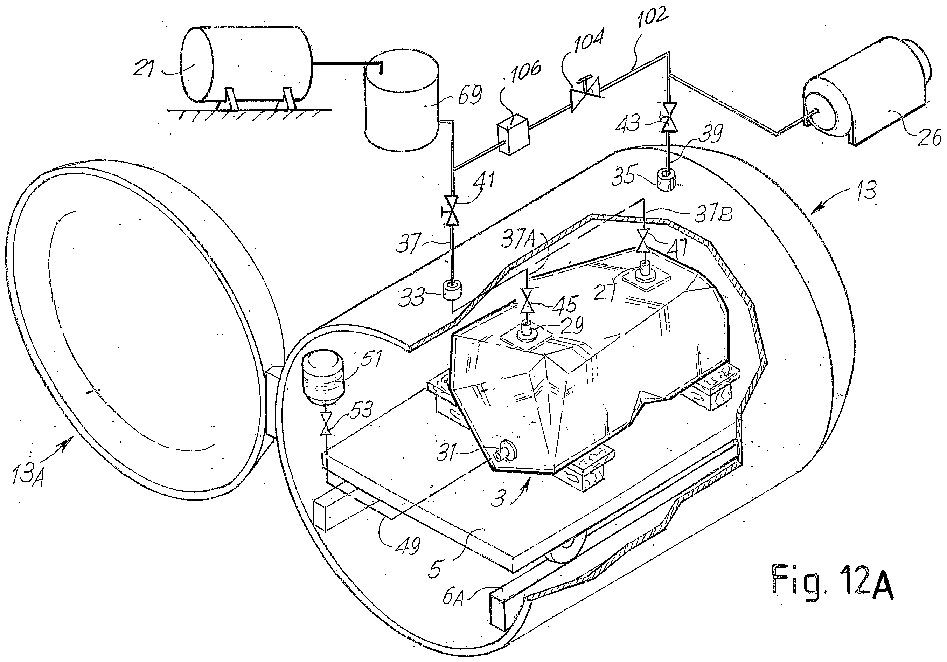

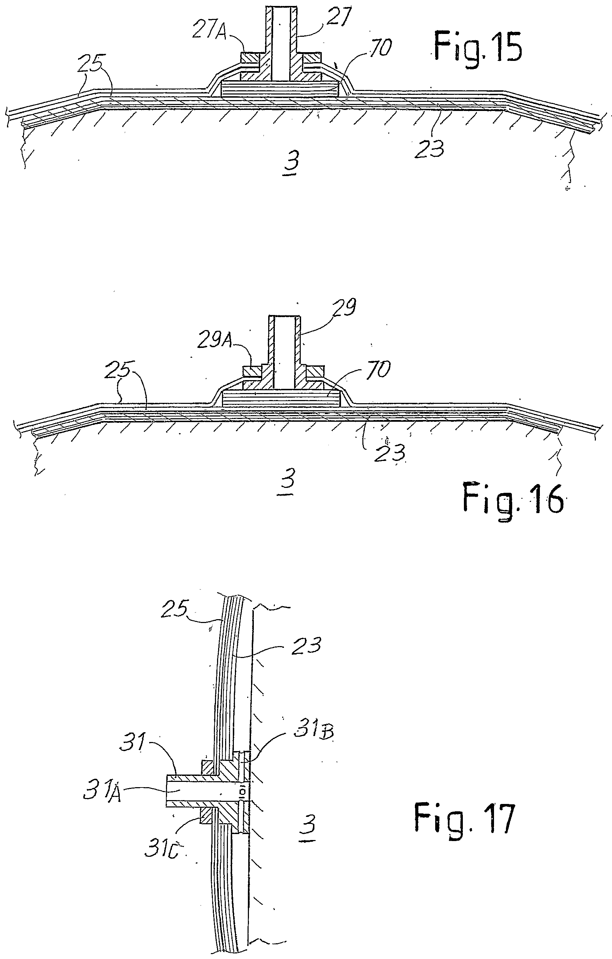

Each stone block 3 is made to pass along a path through the equipment described above to perform a process for treating stone blocks according to the invention subjected in sequence to the following treatment steps:
- in station 1, placing the block 3 (already washed in the specific station) onto a cart 5 interposing, between cart and block, a flexible sheath 25 (Figure 9) formed of at least one gas-impermeable plastic sheet and, superimposed thereon, a draining and reinforcing layer composed of various superimposed layers 64, 66, 68, - as will be described in detail hereunder - suitable to allow circulation of a liquid resin along the surface of the block (for clarity, in Figure 9 the sheath and the draining and reinforcing layer are shown spread out as if rigid, although they are in fact flexible);
- by means of the cart 5 running along the track 6, transferring the block 3 from the station 1 to the station 7 inside the chamber 8, and keeping the block in the chamber 8 while air heated to a controlled temperature is made to circulate from the convectors 8a to dry said block;
- transferring the block 3, by means of the track 6 and the switching station 9, to one or other of the stations 11 in which the block is completely surrounded by said draining and reinforcing layer and said flexible sheath, the latter being sealed on itself to enclose the block 3 inside a volume formed by said sheath 25 in a manner sealed off from the outside environment (Figure 10). In these conditions, the following are applied to the sheath: a first upper nozzle 27 (Figures 11 and 15) suitable to connect, by means of a specific pipe (not shown in the drawing), the sealed volume formed around the block 3 by the sheath 25 with the suction port of a vacuum pump 21 (Figures 1 and 12); a second upper nozzle 29 (Figures 11, 12 and 16) suitable to connect, by means of a specific pipe, said suction port of said vacuum pump 21 with the space remaining between said sheets forming the sheath 25; and a lower nozzle 31 (Figures 11 and 17), suitable to connect, by means of a specific pipe, the sealed volume between block 3 and sheath 25 with a series of containers 19 (Figure 1) of liquid resin kept under pressure by a compressor 26;
   at this point the vacuum pump 21 is switched on, thus making the sheath 25 adhere tightly to the block 3 with said draining and reinforcing layer interposed, and resin is fed to the nozzle 31 to gradually and completely fill, from the bottom upwards, said sealed volume around the block 3 through the cavities of said draining layer, the resin lapping the entire surface of the block 3 and penetrating, through capillarity, the cracks of said block, where the vacuum reigns;
- the ducts connecting the block to the vacuum pump 21 and to the containers 19 supplying resin are then closed through specific valves and separated from the block 3, which is transferred into the autoclave 13 of the station 12 (see also Figure 12) through the switching station 9. The autoclave comprises inside a section of track 6A to receive the cart 5 carrying the block 3, and has a sealably closable hatch 13A. As shown in Figure 12, two passages 33, 35 are produced in the cylindrical walls of the autoclave 13, for respective pipes 37, 39 for connection respectively with the vacuum pump 21 and with the air compressor 26, with respective shut-off valves 41, 43 provided on the pipes. The pipe 39 flows into the autoclave 13, to allow it to be pressurized once the hatch 13A has been closed. The pipe 37 continues inside the autoclave dividing into two branches 37A, 37B (Figure 12) each provided with a shut-off valve 45, 47 and connected respectively to the nozzles 29, 27 attached to the sheath 25 surrounding the block 3. An elastic container 51 containing liquid resin is connected to the lower nozzle 31 attached to the lower area of the sheath 25, by means of a short duct 49 with respective shut-off valve 53;
- in these conditions, with the autoclave hatch 13A open, the vacuum pump 21 is switched on to again produce vacuum pressure in the sealed volume between the flexible and gas-impermeable sheath 25 and the block 3 and any space remaining between the two sheets forming the sheath 25, and simultaneously, acting manually on the elastic container 51, filling of said sealed volume with liquid resin is completed and the valve 53 is then shut;
- the hatch 13A is then closed and the pressure in the autoclave is increased (e.g. to 8 bar) using compressed air supplied by the compressor 26. The block 3 is left in these conditions for the time required by the resin to fill the system of cracks in the block;
- the autoclave 13 is then depressurized and opened, the pipes 37A, 37B, 49 are detached from the respective nozzles 29, 27, 31 and the block 3 is removed from the autoclave and sent to the polymerization station 15 where the nozzles are reconnected to another vacuum source (not shown in the drawing) and, again keeping the block/sheath assembly in a vacuum, it is left for a few hours in a chamber 15A in which hot air is made to circulate (e.g. at 50°C) to complete polymerization of the resin. Subsequently, the block 3, with the respective cart, is returned to the loading/unloading station 1 and the sheath 25, draining layer 23 and various nozzles attached thereto are removed, and it is ready for subsequent processes, such as cutting into slabs, strips or similar.

Figure 12A, which is similar to Figure 12, shows an improved embodiment with respect to the one in Figure 12. According to this improved embodiment, in addition to what is shown in Figure 12, a duct 102 is added between the pipes 37 and 39, which - besides a shut-off valve - is also provided with a pressure reduction unit 106, to reduce the percentage of pressure of the compressor 26. With this improved embodiment, after inserting the block 3 with its sheath 25 into the autoclave 13, and after having closed the autoclave (and restored the vacuum in the volume receiving the block through the system 21, 69, 37, 29, 27) the autoclave is pressurized with the system 26, 39, 35 and simultaneously the system 21, 69 is excluded and the duct 102 is opened; therefore, while the pressure is reached and maintained in the autoclave, progressive pressurization is simultaneously obtained in the sheath 25 which is proportionally slightly lower than the autoclave, due to the presence of the pressure reducer 106; this promotes more complete penetration of the resin in the cracks of the block being treated, also shortening the entire treatment step in the autoclave. Suitable valves 41, 43 and 104 allow the operations required to perform said treatment step in the autoclave. In particular, the block will be maintained in the condition described for a time variable according to the characteristics of the pressurization system, the type of resin used and the dimensions of the block. The step to depressurize the autoclave will then start, during which the differential between the outside and inside of the sheath must be maintained until the vacuum is restored before opening the autoclave. Said vacuum must also be maintained in the catalyzation step in the hot chamber.

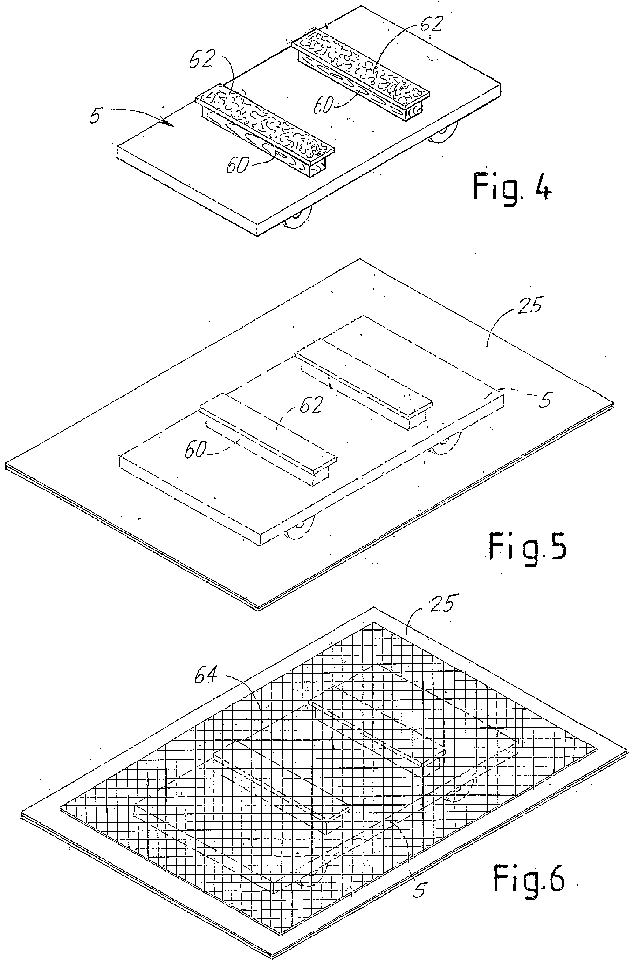

With reference to Figures 4 to 11, hereunder follows a description of an example of preparation of the block with the gas-impermeable sheath and with the draining layer, for the process described above.

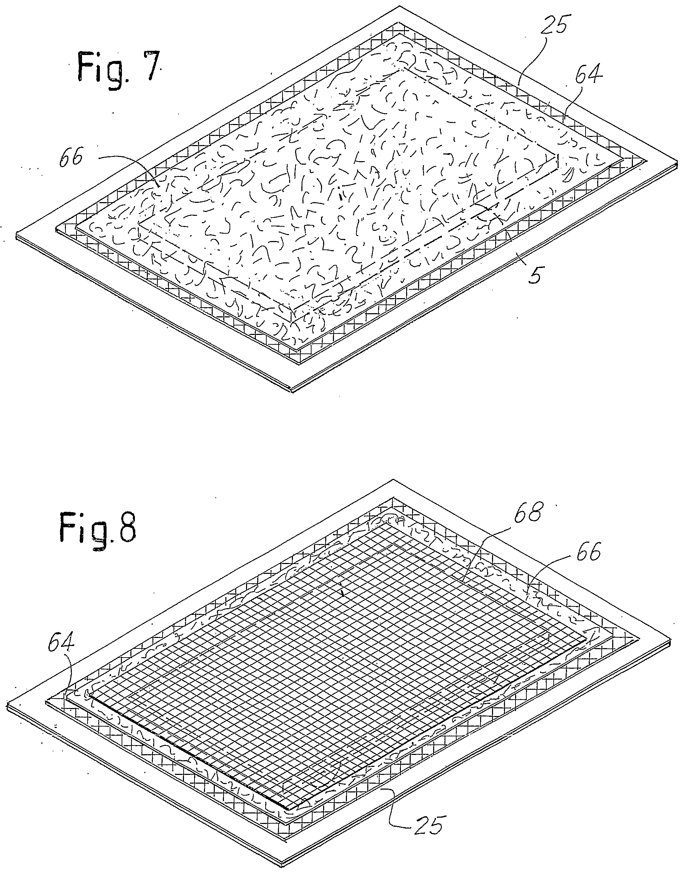

Prior to placing the stone block, two wooden lists 60 are placed on the cart 5 (Figure 4) with respective strips of felt 62 on top, suitable to prevent chipping of the block in the contact points. Subsequently, placed on top of the strips of felt 62, in this order are: a double gas-impermeable nylon sheet 25 (Figure 5), a glass fiber mat 64 (Figure 6), a layer of felt 66 (Figure 7), a plastic mesh 68 of the type with weft superimposed on the warp (Figure 8), and then the block 3 (Figure 9). The mat 64, the layer of felt 66 and the mesh 68 form the draining and reinforcing layer 23, interposed between the sheath 25 and the block 3; in station 11 this layer 23 is also positioned laterally and superiorly to the block 3 to surround it, and is enclosed in a sealed manner by the double sheet 25, sealing the free edges on the outer surface thereof.

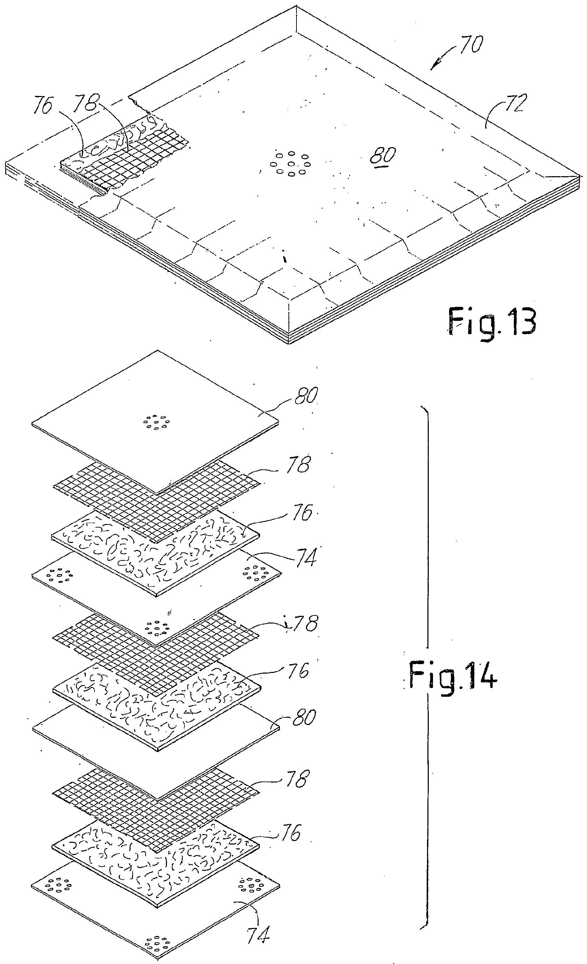

In the step to wind the sheath 25 around the block 3 the nozzle 31 to supply resin is attached to the lower part thereof. This nozzle (see Figure 17), which is clamped to the sheath 25 with a ring nut 31C, passes through both the sheath 25 and the draining and reinforcing layer 23 and has a through hole 31A communicating with radial holes 31 B, to allow the resin to reach the volume defined by the sheath and by the surfaces of the block 3. Moreover, the nozzles 27, 29 are attached to the upper part of the block 3, to connect the sealed volume between the sheath 25 and the block 3 with the vacuum pump 21. The nozzle 27 is made to pass through the two sheets of the sheath 25 (Figure 15) and is attached thereto by means of a ring nut 27A. The nozzle 29 is instead made to pass through the outer sheet of the sheath 25 only (Figure 16), attaching it thereto with its own ring nut 29A. In contact with the lower surface (observing Figures 15 and 16) of the nozzles 27, 29, is a filter-trap 70, suitable to delay, through obstruction, any passage of liquid resin from said sealed volume between the sheath 25 and the block 3 into the pipes 37A, 37B (Figure 12) towards the vacuum pump. For greater safety, a container to separate the resin from the suction air of the pump can be mounted on the connection pipe 37 with the vacuum pump, such as a cyclone separator 69 (see Figure 12). In a preferred embodiment, the filter-trap 70 (Figures 13 and 14) is formed of a series of square layers superimposed and held in contact by peripheral adhesive tape 72, as shown in Figure 14 in which:
- the layers 74 are made of impermeable nylon with through holes at the level of the vertices;
- the layers 76 are made of felt;
- the layers 78 are made of draining mesh;
- the layers 80 are made of impermeable nylon with through holes in the center.

In this way the flow of air sucked in by the vacuum pump, from the sealed volume between sheath 25 and block 3, must follow a labyrinth path and pass through draining felt and mesh, obstructing rapid flow of resin towards the pump.

It is understood that the drawing only shows an example provided by way of a practical embodiment of the invention, which may vary in forms and arrangements without however departing from the scope of the appended claims. Any reference numerals in the appended claims are provided to facilitate reading thereof with reference to the description and do not limit the scope of protection represented by the claims.

## Claims

1. Process for treating quarry blocks - for example marble, granite or other stones - using synthetic resins made to penetrate the cracks of the material by means of a vacuum and made to polymerize, including the following steps:
- the block (3) is substantially surrounded by a draining and reinforcing layer (23), suitable to allow resin to circulate around the surfaces of the block;
- the block (3) is then surrounded by a flexible sheath (25) which is formed by at least one gas-impermeable plastic sheet, said sheath being sealed to create a sealed volume around the block (3) and the draining and reinforcing layer (23);
- suction is implemented from the top part of said volume to create therein a high degree of vacuum around and inside the block (3);
- liquid resin to be polymerized is fed into the bottom part of said volume through a lower nozzle (31) attached to the lower area of the sheath, to cover the entire surface of the block (3) with vacuum conditions inside the sealed volume;
**characterized in that**
pressure is created outside said sealed sheath (25) inside an autoclave (13) and said pressure is maintained around the block (3) at least until the resin has penetrated the cracks of the block, during said pressurization step in the autoclave, progressive pressurization of the block and of the resin is performed inside the sheath (25), to maintain only a slight difference between the level of pressure in the autoclave and the lower pressure in the volume inside said sheath (25) containing the block and the resin.

2. Process as claimed in claim 1, **characterized in that** suction from the top part of said volume is implemented through a labyrinth path of a filter-trap (70), to prevent resin from penetrating the suction duct (37) while ensuring that the block (3) in said volume is fully immersed in resin.

3. Process as claimed in at least one of the previous claims, **characterized in that** a cyclone separation chamber (69) or similar, to withhold traces of resin, is inserted in the duct (37) that connects said sealed volume with the suction port of a vacuum pump (21).

4. Process as claimed in at least one of the previous claims, **characterized in that** the block (3) is first washed and dried in a hot chamber (8) with circulation of air heated to a controlled temperature.

5. Process as claimed in at least one of the previous claims, **characterized in that** polymerization is completed in a specific chamber (15A) heated to a controlled temperature while a high degree of vacuum is maintained between the block (3) and the sheath (25).

6. Process as claimed in one or more of the previous claims, **characterized in that** at the beginning of the process the block is placed on a cart (5), interposing said at least one sheet suitable to form a sheath (25) and a draining layer (23) so that, after the washing and drying step, it is possible to complete the draining and reinforcing layer (23), surround the block with said sheet (25) to form a sealed covering and to perform the other steps of the process moving said cart (5) between the various work stations, without moving the block (3) on the cart (5) or removing it therefrom.

7. Process as claimed in one or more of the previous claims, **characterized in that** said draining and reinforcing layer (23) covering the block (3) comprises panels of felt (66) suitable to absorb the resin.

8. Process as claimed in one or more of the previous claims, **characterized in that** said draining and reinforcing layer (23) covering the block (3) comprises meshes (68) having the weft superimposed on the warp, to allow the resin to circulate.

9. Process as claimed in one ore more of the previous claims, **characterized in that** said draining and reinforcing layer (23) covering the block (3) comprises glass fiber mats (64), to promote circulation of the resin.

10. Process as claimed in one or more of the previous claims, **characterized in that**, at least when the block (3) is placed inside the autoclave (13), an elastic container (51) filled with resin is inserted along the feed path of the resin between the sealed covering and the block, to allow manual filling to form a uniform layer of resin around the block (3).

11. Process as claimed in at least one of the previous claims, **characterized in that** the vacuum pressure formed inside the covering (25) surrounding the block (3) reaches at least 0.1 bar.

12. Process as claimed in at least one of the previous claims, **characterized in that** the pressure maintained in the autoclave (13) during treatment of the covered block (3) is at least 8 bar.

13. Process as claimed in at least one of the previous claims, **characterized in that** in the operation to make the resin penetrate the covering with draining layer, the resin is fed with a high hydraulic head, with respect to the one due to ambient pressure.

14. Equipment to perform the process to treat stone blocks as claimed in one or more of the previous claims, comprising:
- a first station to prepare the blocks (3) placed on carts (5), with completion of a draining and reinforcing layer (23), surrounding with a sheath (25) and hermetic closing, and injection of polymerizable resin between the blocks (3) and the respective sheaths (25);
- a second station (12) comprising an autoclave (13) suitable to receive at least one block (3) thus prepared with the respective cart (5) and subject it to a pre-established external pressure at least until polymerization of the resin starts;
- a third station (15) for completion of polymerization of the resin, **characterized in that** said third station comprises a chamber (15A), complete with a vacuum pump system and suitable to receive at least one covered block with its respective cart, with circulation of air heated to a controlled temperature inside said chamber (15A) while maintaining the sheath/block assembly in a vacuum.

15. Equipment as claimed in claim 14, **characterized in that** it also comprises:
- a station to wash the blocks (3) with jets of water using high pressure hoses;
- a system to move the blocks (3) between various workstations comprising individual transport carts (5, 12);
- a station (1) to load the blocks (3) to be treated onto said carts (5) and to unload the treated blocks; and
- a station (7) to dry the blocks (3) comprising a chamber (8) with circulation of air heated to a controlled temperature, inside which one or more blocks (3) with the relative carts (5) are placed.

16. Equipment as claimed in claim 14 or 15, **characterized in that** it comprises nozzles (27, 29) attached to the impermeable sheath (25) to allow the sealed volume, included between said sheath and the stone block (3), to communicate with a duct in which vacuum pressure is produced by a vacuum pump, with a filter-trap (70) suitable to prevent or delay the passage of resin interposed between each of said nozzles and said volume.

17. Equipment as claimed in claim 14, 15 or 16, **characterized in that** said filter-trap (70) is formed of a series of superimposed layers comprising impermeable layers (74) with peripheral through holes, layers (76) of felt, layers (78) of draining mesh, impermeable layers (80) with through holes in the center, said layers being alternated to define a labyrinth path through the filter-trap from one side thereof to the other.

18. Equipment as claimed in one or more of claims 14 to 17, **characterized in that** it comprises a duct (102) which from the pressurization system (26, 37, 39) of the autoclave (13) reaches the cavity surrounding the block to be treated, a pressure reduction unit (106) being provided in said duct (102) to systematically ensure a limited difference in pressure between the pressure in the autoclave (13) and the limitedly and proportionally lower pressure that must reign around the block to be treated.

19. Equipment as claimed in one or more of claims 14 to 17, **characterized in that** it comprises a container of liquid resin - where the resin can be formulated - which is closed and pressurized at least during the step to inject the resin around the surface of the block to be treated.

## Patentansprüche

1. Verfahren zum Behandeln von Bruchblöcken - zum Beispiel Marmor, Granit oder anderen Steinen - unter Verwendung von Kunstharzen, die mittels eines Vakuums dazu gebracht werden, in die Risse des Materials einzudringen, und zum Polymerisieren gebracht werden, das die folgenden Schritte einschließt:
- der Block (3) wird durch eine Drän- und Verstärkungsschicht (23), die geeignet ist, das Harz um die Oberflächen des Blockes herum zirkulieren zu lassen, im Wesentlichen umgeben;
- der Block (3) wird dann von einer flexiblen Hülle (25) umgeben, die durch mindestens eine gasundurchlässige Kunststofffolie gebildet wird, wobei die Hülle versiegelt wird, um einen versiegelten Raum um den Block (3) und die Drän- und Verstärkungsschicht (23) herum zu bilden;
- Absaugung wird von dem oberen Teil des Raumes durchgeführt, um darin einen hohen Grad an Vakuum um den und im Inneren des Blockes (3) zu erzeugen;
- flüssiges Harz, das polymerisiert werden soll, wird in den unteren Teil des Raumes durch eine untere Düse (31), die an dem unteren Bereich der Hülle angebracht ist, zugeführt, um die gesamte Oberfläche des Blockes (3), mit Vakuumbedingungen im Inneren des versiegelten Raumes, zu bedecken;
**dadurch gekennzeichnet, dass**
Druck außerhalb der versiegelten Hülle (25) im Inneren eines Autoklaven (13) erzeugt wird und der Druck um den Block (3) herum aufrechterhalten wird, mindestens bis das Harz in die Risse des Blockes eingedrungen ist, während des Druckbehandlungsschritts in dem Autoklaven progressive Druckbehandlung des Blockes und des Harzes im Inneren der Hülle (25) durchgeführt wird, um nur eine leichte Differenz zwischen dem Druckpegel in dem Autoklaven und dem niedrigeren Druck in dem Raum im Inneren der Hülle (25), die den Block und das Harz enthält, aufrecht zu erhalten.

2. Verfahren gemäß Anspruch 1, **dadurch gekennzeichnet, dass** Absaugung von dem oberen Teil des Raumes durch einen Labyrinthweg einer Filterfalle (70) implementiert wird, um zu verhindern, dass Harz in die Saugleitung (37) eindringt, während sichergestellt wird, dass der Block (3) in dem Raum vollständig in Harz eingetaucht ist.

3. Verfahren gemäß mindestens einem der vorhergehenden Ansprüche, **dadurch gekennzeichnet, dass** eine Zyklontrennkammer (69) oder Ähnliches, um Spuren an Harz zurückzuhalten, in die Leitung (37), die den versiegelten Raum mit dem Sauganschluss einer Vakuumpumpe (21) verbindet, eingefügt ist.

4. Verfahren gemäß mindestens einem der vorhergehenden Ansprüche, **dadurch gekennzeichnet, dass** der Block (3) zuerst gewaschen und getrocknet wird, in einer Heißkammer (8) mit Zirkulation von Luft, die auf eine gesteuerte Temperatur erhitzt wird.

5. Verfahren gemäß mindestens einem der vorhergehenden Ansprüche, **dadurch gekennzeichnet, dass** die Polymerisation in einer speziellen Kammer (15A) vollendet wird, die auf eine gesteuerte Temperatur erwärmt wird, während ein hoher Grad an Vakuum zwischen dem Block (3) und der Hülle (25) aufrechterhalten wird.

6. Verfahren gemäß einem oder mehreren der vorhergehenden Ansprüche, **dadurch gekennzeichnet, dass** an dem Beginn des Verfahrens der Block auf einem Wagen (5) angeordnet wird, wobei die mindestens eine Folie, die geeignet ist, eine Hülle (25) zu bilden, und eine Dränschicht (23) so dazwischen gelegt wird, dass es, nach dem Wasch- und Trocknungsschritt, möglich ist, die Drän-und Verstärkungsschicht (23) fertig zu stellen, den Block mit der Folie (25) zu umgeben, um eine versiegelte Abdeckung zu bilden, und die anderen Schritte des Prozesses durchzuführen, wobei der Wagen (5) zwischen den verschiedenen Arbeitsstationen bewegt wird, ohne den Block (3) auf dem Wagen (5) zu bewegen oder ihn davon zu entfernen.

7. Verfahren gemäß einem oder mehreren der vorhergehenden Ansprüche, **dadurch gekennzeichnet, dass** die Drän- und Verstärkungsschicht (23), die den Block (3) bedeckt, Bahnen aus Filz (66), die geeignet sind, das Harz zu absorbieren, umfasst.

8. Verfahren gemäß einem oder mehreren der vorhergehenden Ansprüche, **dadurch gekennzeichnet, dass** die Drän- und Verstärkungsschicht (23), die den Block (3) bedeckt, Gewebe (68) umfasst, bei welchen der Schuss auf der Kette liegt, um eine Zirkulation des Harzes zu erlauben.

9. Verfahren gemäß einem oder mehreren der vorhergehenden Ansprüche, **dadurch gekennzeichnet, dass** die Drän- und Verstärkungsschicht (23), die den Block (3) bedeckt, Glasfasermatten (64) umfasst, um die Zirkulation des Harzes zu fördern.

10. Verfahren gemäß einem oder mehreren der vorhergehenden Ansprüche, **dadurch gekennzeichnet, dass**, mindestens wenn der Block (3) im Inneren des Autoklaven (13) angeordnet ist, ein elastischer Behälter (51), der mit Harz gefüllt ist, entlang des Zufuhrweges des Harzes zwischen der versiegelten Abdeckung und dem Block eingefügt ist, um eine manuelle Füllung zu erlauben, um eine gleichförmige Harzschicht um den Block (3) herum zu bilden.

11. Verfahren gemäß mindestens einem der vorhergehenden Ansprüche, **dadurch gekennzeichnet, dass** der Vakuumdruck, der im Inneren der Abdeckung (25), die den Block (3) umgibt, mindestens 0,1 bar erreicht.

12. Verfahren gemäß mindestens einem der vorhergehenden Ansprüche, **dadurch gekennzeichnet, dass** der Druck, der in dem Autoklaven (13) während der Behandlung des abgedeckten Blockes (3) aufrechterhalten wird, mindestens 8 bar beträgt.

13. Verfahren gemäß mindestens einem der vorhergehenden Ansprüche, **dadurch gekennzeichnet, dass** in dem Vorgang, das Harz dazu zu bringen, in die Abdeckung mit der Dränschicht einzudringen, das Harz mit einer hohen Druckhöhe, hinsichtlich derjenigen, die wegen des Umgebungsdruckes nötig ist, zugeführt wird.

14. Vorrichtung zum Durchführen des Verfahrens zur Behandlung von Steinblöcken gemäß einem oder mehreren der vorhergehenden Ansprüche, die Folgendes umfasst:
- eine erste Station, um die Blöcke (3), die auf Wagen (5) angeordnet sind, mit Fertigstellung einer Drän- und Verstärkungsschicht (23), Umgebung mit einer Hülle (25) und hermetischem Verschluss und Injektion von polymerisierbarem Harz zwischen die Blöcke (3) und die jeweiligen Hüllen (25) herzustellen;
- eine zweite Station (12), die einen Autoklaven (13) umfasst, der geeignet ist, mindestens einen Block (3), der so hergestellt wurde, mit dem entsprechenden Wagen (5) aufzunehmen und ihn mit einem vorher festgesetzten äußeren Druck, mindestens bis die Polymerisation des Harzes beginnt, zu beaufschlagen;
- eine dritte Station (15) zur Vollendung der Polymerisation des Harzes,
**dadurch gekennzeichnet, dass** die dritte Station eine Kammer (15A) umfasst, komplett mit einem Vakuumpumpensystem und geeignet, mindestens einen abgedeckten Block mit seinem jeweiligen Wagen aufzunehmen, mit Zirkulation von Luft, die auf eine gesteuerte Temperatur erwärmt ist, im Inneren der Kammer (15A), während die Hülle/Block-Anordnung in einem Vakuum gehalten wird.

15. Vorrichtung gemäß Anspruch 14, **dadurch gekennzeichnet, dass** sie ebenfalls umfasst:
- eine Station zum Waschen der Blöcke (3) mit Wasserstrahlen unter Verwendung von Hochdruckschläuchen;
- ein System zum Bewegen der Blöcke (3) zwischen unterschiedlichen Arbeitsstationen, das individuelle Transportwagen (5, 12) umfasst;
- eine Station (1) zum Laden der Blöcke (3), die behandelt werden sollen, auf die Wagen (5) und zum Abladen der behandelten Blöcke; und
- eine Station (7) zum Trocknen der Blöcke (3), die eine Kammer (8) mit Zirkulation von Luft, die auf eine gesteuerte Temperatur erwärmt wurde, in deren Inneren ein oder mehr Blöcke (3) mit den jeweiligen Wagen (5) angeordnet werden, umfasst.

16. Vorrichtung gemäß Anspruch 14 oder 15, **dadurch gekennzeichnet, dass** sie Düsen (27, 29) umfasst, die an der undurchlässigen Hülle (25) angebracht sind, um zu ermöglichen, dass der versiegelte Raum, der zwischen der Hülle und dem Steinblock (3) eingeschlossen ist, mit einer Leitung kommuniziert, in der durch eine Vakuumpumpe Vakuumdruck erzeugt wird, wobei eine Filterfalle (70), die geeignet ist den Durchtritt von Harz zu verhindern oder zu verzögern, zwischen jeder der Düsen und dem Raum angeordnet ist.

17. Vorrichtung gemäß Anspruch 14, 15 oder 16, **dadurch gekennzeichnet, dass** die Filterfalle (70) aus einer Reihe von übereinandergelegten Schichten gebildet ist, die undurchlässige Schichten (74) mit peripheren Durchgangslöchern, Schichten (76) aus Filz, Schichten (78) aus Drängewebe, undurchlässige Schichten (80) mit Durchgangslöchern in der Mitte umfasst, wobei die Schichten sich abwechseln, um einen Labyrinthweg durch die Filterfalle von deren einen Seite zu der anderen zu definieren.

18. Vorrichtung gemäß einem oder mehreren der Ansprüche 14 bis 17, **dadurch gekennzeichnet, dass** sie eine Leitung (102) umfasst, die von dem Druckbeaufschlagungssystem (26, 37, 39) des Autoklaven (13) den Hohlraum, der den zu behandelnden Block umgibt, erreicht, wobei eine Druckverringerungseinheit (106) in der Leitung (102) bereitgestellt ist, um systematisch eine begrenzte Druckdifferenz zwischen dem Druck in dem Autoklaven (13) und dem begrenzten und proportional niedrigeren Druck, der um den zu behandelnden Block herum vorherrschen muss, sicherzustellen.

19. Vorrichtung gemäß einem oder mehreren der Ansprüche 14 bis 17, **dadurch gekennzeichnet, dass** sie einen Flüssigkeitsbehälter - wo das Harz formuliert werden kann - umfasst, der zumindest während des Schrittes zum Einspritzen des Harzes um die Oberfläche des zu behandelnden Blockes herum geschlossen und unter Druck gesetzt ist.

## Revendications

1. Procédé de traitement de blocs de carrière - par exemple de marbre, granit ou d'autres pierre - en utilisant des résines synthétiques que l'on fait pénétrer dans les fissures du matériau au moyen du vide et polymériser, comprenant les étapes suivantes :
- le bloc (3) est substantiellement entouré par une couche d'assèchement et de renforcement (23), apte à permettre à de la résine de circuler autour des surfaces du bloc ;
- le bloc (3) est ensuite entouré d'une gaine flexible (25) qui est formée par au moins une feuille de plastique imperméable aux gaz, ladite gaine étant étanche pour créer un volume hermétique autour du bloc (3) et de la couche d'assèchement et de renforcement (23) ;
- une aspiration est effectuée depuis la partie supérieure dudit volume pour créer à l'intérieur de celui-ci un degré élevé de vide autour et à l'intérieur du bloc (3) ;
- une résine liquide destinée à polymériser est introduite dans la partie inférieure dudit volume à travers une buse inférieure (31) fixée à la zone inférieure de la gaine, pour couvrir la surface entière du bloc (3) avec des conditions de vide à l'intérieur du volume hermétique ;
**caractérisé en ce que**
de la pression est créée à l'extérieur de ladite gaine étanche (25) à l'intérieur d'un autoclave (13) et ladite pression est maintenue autour du bloc (3) au moins jusqu'à ce que la résine ait pénétré à l'intérieur des fissures du bloc, durant ladite étape de mise sous pression dans l'autoclave, une mise sous pression progressive du bloc et de la résine est réalisée à l'intérieur de la gaine (25), pour maintenir seulement une légère différence entre le niveau de pression dans l'autoclave et la pression inférieure dans le volume à l'intérieur de ladite gaine (25) contenant le bloc et la résine.

2. Procédé selon la revendication 1, **caractérisé en ce que** l'aspiration depuis la partie supérieure dudit volume est effectuée à travers un chemin en forme de labyrinthe d'un filtre-piège (70), pour empêcher la résine de pénétrer dans le conduit d'aspiration (37) tout en assurant que le bloc (3) dans ledit volume est totalement immergé dans la résine.

3. Procédé selon l'une au moins des revendications précédentes, **caractérisé en ce qu'**une chambre de séparation à cyclone (69) ou similaire, afin de retenir des traces de résine, est insérée dans le conduit (37) qui relie ledit volume étanchéifié avec l'orifice d'aspiration d'une pompe à vide (21).

4. Procédé selon l'une au moins des revendications précédentes, **caractérisé en ce que** le bloc (3) est d'abord lavé et séché dans une chambre chaude (8) avec une circulation d'air chauffé à une température contrôlée.

5. Procédé selon l'une au moins des revendications précédentes, **caractérisé en ce que** la polymérisation est achevée dans une chambre spécifique (15A) chauffée à une température contrôlée tandis qu'un degré élevé de vide est maintenu entre le bloc (3) et la gaine (25).

6. Procédé selon une ou plusieurs des revendications précédentes, **caractérisé en ce qu'**au début du procédé, le bloc est placé sur un chariot (5), en interposant ladite ou lesdites feuille(s) apte(s) à former une gaine (25) et une couche d'assèchement (23) de sorte que, après l'étape de lavage et de séchage, il soit possible de compléter la couche d'assèchement et de renforcement (23), d'entourer le bloc avec ladite feuille (25) pour former une couverture étanche et réaliser les autres étapes du procédé en déplaçant ledit chariot (5) entre les différentes stations de travail, sans déplacer le bloc (3) sur le chariot (5) ou l'enlever de celui-ci.

7. Procédé selon une ou plusieurs des revendications précédentes, **caractérisé en ce que** ladite couche d'assèchement et de renforcement (23) couvrant le bloc (3) comprend des panneaux de feutre (66) aptes à absorber la résine.

8. Procédé selon une ou plusieurs des revendications précédentes, **caractérisé en ce que** ladite couche d'assèchement et de renforcement (23) couvrant le bloc (3) comprise un tamis (68) ayant une trame superposée sur la chaîne, pour permettre à la résine de circuler.

9. Procédé selon une ou plusieurs des revendications précédentes, **caractérisé en ce que** ladite couche d'assèchement et de renforcement (23) couvrant le bloc (3) comprend des feutres de verre (64) pour favoriser la circulation de la résine.

10. Procédé selon une ou plusieurs des revendications précédentes, **caractérisé en ce qu'**au moins lorsque le bloc (3) est placé à l'intérieur de l'autoclave (13), un récipient élastique (51) rempli de résine est inséré le long du chemin d'alimentation de la résine entre la couverture étanche et le bloc, pour permettre un remplissage manuel pour former une couche uniforme de résine autour du bloc (3).

11. Procédé selon l'une au moins des revendications précédentes, **caractérisé en ce que** le vide formé à l'intérieur de la couverture (25) entourant le bloc (3) descend à au moins 0,1 bar.

12. Procédé selon l'une au moins des revendications précédentes, **caractérisé en ce que** la pression maintenue dans l'autoclave (13) durant le traitement du bloc couvert (3) est d'au moins 8 bars.

13. Procédé selon l'une au moins des revendications précédentes, caractérisé en ce durant l'opération consistant à faire pénétrer la résine dans la couverture avec la couche d'assèchement, la résine est alimentée avec une charge hydraulique élevée par rapport à celle due à la pression ambiante.

14. Equipement pour mettre en oeuvre le procédé de traitement de blocs de pierre selon une ou plusieurs des revendications précédentes, comprenant :
- une première station pour préparer les blocs (3) placés sur des chariots (5), avec réalisation d'une couche d'assèchement et de renforcement (23), en entourant avec une gaine (25) et une fermeture hermétique, et injection d'une résine polymérisable entre les blocs (3) et les gaines respectives (25) ;
- une deuxième station (12) comprenant un autoclave (13) apte à recevoir au moins un bloc (3) ainsi préparé avec le chariot respectif (5) et à le soumettre à une pression externe préétablie au moins jusqu'à ce que la polymérisation de la résine démarre ;
- une troisième station (15) pour l'achèvement de la polymérisation de la résine,
**caractérisé en ce que** ladite troisième station comprend une chambre (15A), équipée d'un système de pompe à vide et apte à recevoir au moins un bloc couvert avec son chariot respectif, avec une circulation d'air chauffé à une température contrôlée à l'intérieur de ladite chambre (15A) tout en maintenant l'assemblage gaine/bloc sous vide.

15. Equipement selon la revendication 14, **caractérisé en ce qu'**il comprend en outre :
- une station pour laver les blocs (3) avec des jets d'eau en utilisation des tuyaux sous pression élevée ;
- un système pour déplacer les blocs (3) entre plusieurs stations de travail comprenant des chariots de transport individuels (5, 12) ;
- une station (1) pour charger les blocs (3) à traiter sur lesdits chariots (5) et pour décharger les blocs traités ; et
- une station (7) pour sécher les blocs (3) comprenant une chambre (8) avec une circulation d'air chauffé à une température contrôlée, à l'intérieur de laquelle un ou plusieurs blocs (3) avec leurs chariots respectifs (5) sont placés.

16. Equipement selon la revendication 14 ou 15, **caractérisé en ce qu'**il comprend des buses (27, 29) fixées à la gaine imperméable (25) pour permettre au volume hermétique, compris entre ladite gaine et ledit bloc de pierre (3), de communiquer avec un conduit dans lequel du vide est produit par une pompe à vide, avec un filtre-piège (70) apte à empêcher ou retarder le passage de résine interposée entre chacune desdites buses et ledit volume.

17. Equipement selon la revendication 14, 15 ou 16, **caractérisé en ce que** ledit filtre-piège (70) est formé d'un série de couches superposées comprenant des couches imperméables (74) avec des trous traversants périphériques, des couches de feutre (76), des couches (78) de tamis d'assèchement, des couches imperméables (80) avec des trous traversants au centre, lesdites couches étant alternées pour définir un chemin en forme de labyrinthe à travers le filtre-piège d'un côté de celui-ci à l'autre.

18. Equipement selon une ou plusieurs des revendications 14 à 17, **caractérisé en ce qu'**il comprend un conduit (102) qui, depuis le système de mise sous pression (26, 37, 39) de l'autoclave (13) rejoint la cavité entourant le bloc à traiter, une unité de réduction de pression (106) étant prévue dans ledit conduit (102) pour garantir systématique une différence limitée de pression entre la pression dans l'autoclave (13) et la pression proportionnellement inférieure et limitée qui doit régner autour du bloc à traiter.

19. Equipement selon une ou plusieurs des revendications 14 à 17, **caractérisé en ce qu'**il comprend un récipient de résine liquide - où la résine peut être formulée - lequel est fermé et mis sous pression au moins durant l'étape d'injection de la résine autour de la surface du bloc à traiter.
